# EUROPEAN PATENT APPLICATION

(11) **EP 4 811 179 A1**
(43) Date of publication of application: **23.09.2026**
(21) Application number: 26153356.6
(22) Date of filing: 22.01.2026
(51) Int. Cl.: G06F 21/10

(54) **SYSTEM, INFORMATION PROCESSING APPARATUS, AND METHOD**

(30) Priority: 19.03.2025 JP 2025044359
(71) Applicant: Ricoh Company, Ltd., Tokyo 143-8555 (JP)
(72) Inventor: TANAKA, Satoshi, Tokyo, 143-8555 (JP)
(74) Representative: SSM Sandmair

(57) **Abstract**

A system (500) includes an information processing apparatus (2) and a terminal apparatus (1) connected to the information processing apparatus (2) via a network. The information processing apparatus (2) includes a compressed file creation unit (22) to compress a file to create a compressed file that includes validity period information and a script, and a transmission unit to transmit the compressed file created by the compressed file creation unit (22) to the terminal apparatus (1). The terminal apparatus (1) includes a storage unit (14) to store a decompression tool (15), a processing unit (101) to execute the decompression tool (15), and a display unit (12). The decompression tool (15) starts a decompression process on the compressed file received from the information processing apparatus (2), executes the script during the decompression process to acquire a system time of the terminal apparatus (1), and compares between the system time and the validity period information. In a case that the system time does not satisfy the validity period information, the decompression tool terminates the decompression process, and in a case that the system time satisfies the validity period information, the decompression tool decompresses the compressed file to obtain a decompressed file.

## Description

### BACKGROUND

### Technical Field

The present disclosure relates to a system, an information processing apparatus, and a method.

### Related Art

In the related art, a document or image file used for advertising or promotion sometimes includes information indicating a validity period of the use of the file. A file containing a copyrighted work or portrait image is an example of the file. Such a file can be used while the contract is valid, but is prevented from being used after the contract expires without permission.

A technique that provides a time-limit management function has been disclosed (see Japanese Unexamined Patent Application Publication No. 2011-23024).

However, the technique in the related art has a drawback that, when the file is stored in a terminal apparatus of a user, the file in the terminal apparatus of the user can be used indefinitely.

### SUMMARY

The present disclosure described herein provides a system including an information processing apparatus and a terminal apparatus connected to the information processing apparatus via a network. The information processing apparatus includes a compressed file creation unit to compress a file to create a compressed file that includes validity period information and a script, and a transmission unit to transmit the compressed file created by the compressed file creation unit to the terminal apparatus. The terminal apparatus includes a storage unit to store a decompression tool, a processing unit to execute the decompression tool, and a display unit. The decompression tool starts a decompression process on the compressed file received from the information processing apparatus, executes the script during the decompression process to acquire a system time of the terminal apparatus, and compares between the system time and the validity period information. In a case that the system time does not satisfy the validity period information, the decompression tool terminates the decompression process, and in a case that the system time satisfies the validity period information, the decompression tool decompresses the compressed file to obtain a decompressed file.

According to one aspect of the present disclosure, an information processing apparatus includes a compressed file creation unit to compress a file to create a compressed file that includes validity period information and a script and a transmission unit to transmit the compressed file created by the compressed file creation unit to a terminal apparatus connected to the information processing apparatus via a network. The script is executed on the terminal apparatus after a decompression process is started on the compressed file at the terminal apparatus to obtain a decompressed file and the script controls permission to use the decompressed file at the terminal apparatus based on a comparison between a system time of the terminal apparatus for the decompression process being performed and the validity period information.

According to one aspect of the present disclosure, a method performed by a system including an information processing apparatus and a terminal apparatus includes compressing, with the information processing apparatus, a file to create a compressed file that includes validity period information and a script, transmitting, with the information processing apparatus, the compressed file to the terminal apparatus via a network, executing, with the terminal apparatus, a decompression tool, starting, with the terminal apparatus, a decompression process on the compressed file received from the information processing apparatus, executing, with the terminal apparatus, the script during the decompression process to acquire a system time of the terminal apparatus, and comparing, with the terminal apparatus, between the system time and the validity period information. In a case that the system time does not satisfy the validity period information, the method further comprising terminating, with the terminal apparatus, the decompression process, and in a case that the system time satisfies the validity period information, the method further comprising decompressing, with the terminal apparatus, the compressed file to obtain a decompressed file.

According to one aspect of the present disclosure, a file whose validity period has expired is prevented from being used.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of a network configuration of a system that includes terminal apparatuses and a time-limit management apparatus that corresponds to an information processing apparatus;
FIG. 2 is a block diagram illustrating a hardware configuration of a terminal apparatus;
FIG. 3 is a block diagram illustrating a hardware configuration of an information processing apparatus;
FIG. 4 is a block diagram illustrating functional configurations of a terminal apparatuses and a time-limit management apparatus;
FIG. 5 is a diagram illustrating a special process performed by a compressed file creation unit;
FIG. 6 is a diagram illustrating a structure of a history management table;
FIG. 7 is a sequence diagram illustrating processes performed in a terminal apparatus and a time-limit management apparatus when a file (a file to be uploaded) is uploaded from the terminal apparatus to the time-limit management apparatus;
FIG. 8 is a flowchart of a process to decompress, in a terminal apparatus, a compressed file that has been downloaded;
FIG. 9 is a block diagram illustrating the process at the time of the decompression illustrated in FIG. 8;
FIG. 10 is a diagram illustrating an example of a password generation script;
FIG. 11 is a diagram illustrating an example of a dynamic link library (DLL) generated by a DLL generation script;
FIG. 12 is a flowchart of a process performed by a DLL stored in a terminal apparatus;
FIG. 13 is a flowchart of a process performed by an application after a process performed by a DLL;
FIG. 14 is a block diagram for explaining the processes illustrated in FIGs. 12 and 13;
FIG. 15 is a diagram illustrating an example of a setting screen;
FIG. 16 is a diagram illustrating an example of notification information to be displayed when a compressed file is prevented from being decompressed on a terminal apparatus; and
FIG. 17 is a diagram illustrating an example of notification information to be displayed when a file is to be deleted on a terminal apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A system, an information processing apparatus, and a method according to embodiments of the present disclosure are described in detail below with reference to the accompanying drawings.

### Network Configuration

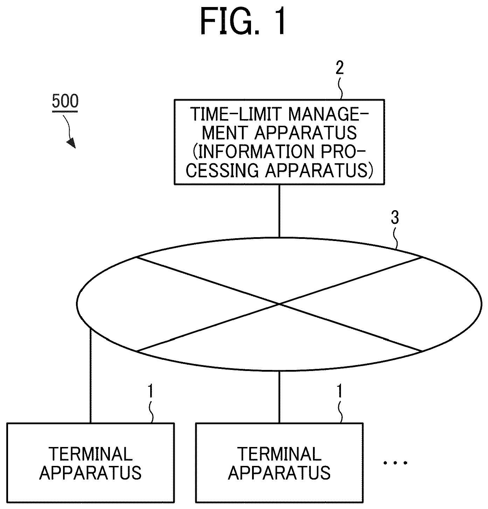

FIG. 1 is a diagram illustrating an example of a network configuration of a system 500 that includes terminal apparatuses 1 and a time-limit management apparatus 2 that corresponds to an information processing apparatus. The terminal apparatuses 1 illustrated in FIG. 1 are each communicable with the time-limit management apparatus 2 via a communication network 3. The communication network 3 is, for example, one or more local area networks (LANs) arranged inside the firewall. In another example, the communication network 3 may include the Internet that is arranged outside the firewall in addition to the LANs. In still another example, the communication network 3 may include a virtual private network (VPN) or a wide area Ethernet^{®}. The communication network 3 is any one of a wired network, a wireless network, and a combination of the wired network and the wireless network. In the case where a mobile phone network such as Long Term Evolution (LTE), the fourth generation, or the fifth generation is used for the communication, the LANs may be omitted. Any network configuration that allows the terminal apparatuses 1 to access the time-limit management apparatus 2 can be used.

Each of the terminal apparatuses 1 is, for example, a smartphone, a desktop computer, a laptop computer, or a tablet terminal.

Among the multiple terminal apparatuses 1 illustrated in FIG. 1, at least one terminal apparatus 1 is a terminal apparatus that provides a file, and at least one other terminal apparatus 1 is a terminal apparatus that uses the provided file. Note that one terminal apparatus 1 may function both as the terminal apparatus that provides the file and as the terminal apparatus that uses the provided file. In this case, the minimum number of terminal apparatuses 1 in the system 500 including the terminal apparatuses 1 and the time-limit management apparatus 2 is one.

The file refers to a file that a provider shares with a user. As an example, the file is a document file containing text or an image file. The file may contain both text and images. The file is not limited to a document file or an image file, and may be another type of file, such as a video file. In the following description, the "file" simply refers to a file to be shared. A file that is compressed, which will be described later, is referred to as a compressed file.

The time-limit management apparatus 2 is an information processing apparatus that disables the use of a file whose validity period has expired. The file can be used while the contract with the provider of the file is valid, but is prevented from being used after the contract has expired. For this purpose, the time-limit management apparatus 2 disables the use of a file whose validity period has expired. An example of the file includes, but is not limited to, a file containing a copyrighted work or portrait image. A file unrelated to a copyrighted work or portrait image may also be shared with the user with a validity period.

The time-limit management apparatus 2 may be implemented by a single computer or multiple computers that share the processing among the multiple computers. Alternatively, the time-limit management apparatus 2 may be implemented by multiple computers each of which executes some of the functions of the time-limit management apparatus 2 and communicates with one another. The time-limit management apparatus 2 may further provide services such as file transfer, e-mail, and storage. The time-limit management apparatus 2 may alternatively be configured to cooperate with an external server. The external server is, for example, a server that provides the services such as file transfer, e-mail, and storage. The time-limit management apparatus 2 may be arranged in a cloud.

In the present embodiment, the terminal apparatus 1 that provides the file transmits the file. The terminal apparatus 1 that uses the file receives and uses the file that has been processed in the time-limit management apparatus 2. As will be described in detail later, by processing the file in the time-limit management apparatus 2, a special process is applied to the file so that time-limit management is performed for the file on the terminal apparatus 1 that uses the file. The time-limit management refers to managing a file by determining, based on time, whether the validity period of the file has expired. The special process is a process to disable the use of the file on the terminal apparatus 1 when the validity period of the file has expired.

In the following description, the communication between the terminal apparatuses 1 and the time-limit management apparatus 2 is performed through a world wide web (WWW). However, the communication system between the terminal apparatuses 1 and the time-limit management apparatus 2 is not limited thereto. The communication system may be appropriately modified according to the configuration of the network.

### Terminal Apparatus

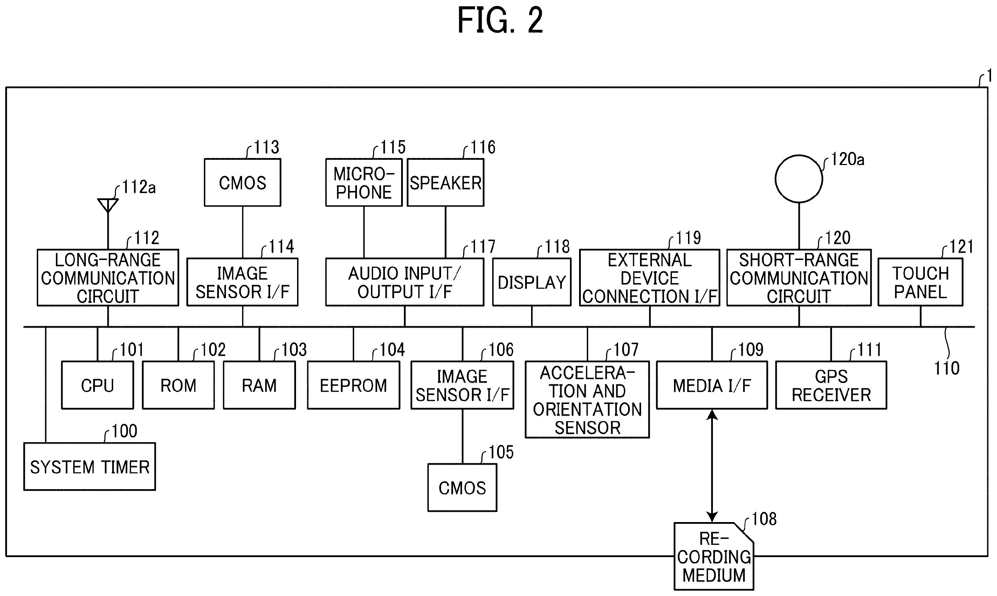

FIG. 2 is a block diagram illustrating a hardware configuration of the terminal apparatus 1. The hardware configuration of the terminal apparatus 1 illustrated in FIG. 2 is given by way of example as a hardware configuration of a smartphone. The terminal apparatus 1 illustrated in FIG. 2 includes a system timer 100, a central processing unit (CPU) 101, a read-only memory (ROM) 102, a random-access memory (RAM) 103, an electrically erasable programmable read-only memory (EEPROM) 104, a complementary metal oxide semiconductor (CMOS) sensor 105, an image sensor interface (I/F) 106, an acceleration and orientation sensor 107, a recording medium 108, a media I/F 109, and a global positioning system (GPS) receiver 111.

The system timer 100 generates a system time of the apparatus to which the system timer 100 belongs.

The CPU 101 controls the overall operation of the terminal apparatus 1. The ROM 102 stores, for example, a program used by the CPU 101 and a program such as an initial program loader (IPL) used for booting the CPU 101. The RAM 103 is used as a work area for the CPU 101. The EEPROM 104 reads or writes various data such as a program under the control of the CPU 101.

The CMOS sensor 105 captures an image of a subject under the control of the CPU 101 to obtain image data. Instead of the CMOS sensor 105, an imaging device such as a charge-coupled device (CCD) sensor may be used. The CMOS sensor and the CCD sensor are each an imaging device. The image sensor I/F 106 is a circuit that controls the driving of the CMOS sensor 105. The acceleration and orientation sensor 107 includes various sensors, such as an electromagnetic compass or gyrocompass for detecting geomagnetism and an acceleration sensor.

The media I/F 109 controls the reading of data from, or the writing of data to, the recording medium 108, which is an example of a removable recording medium such as a flash memory. The GPS receiver 111 receives a GPS signal.

The terminal apparatus 1 further includes a long-range communication circuit 112, an antenna 112a for the long-range communication circuit 112, a CMOS sensor 113, an image sensor I/F 114, a microphone 115, a speaker 116, an audio input/output I/F 117, a display 118, an external device connection I/F 119, a short-range communication circuit 120, an antenna 120a for the short-range communication circuit 120, and a touch panel 121.

The long-range communication circuit 112 is a wireless communication circuit for connecting to, for example, an access point.

The CMOS sensor 113 captures an image of a subject under the control of the CPU 101 to obtain image data. The image sensor I/F 114 is a circuit that controls the driving of the CMOS sensor 113. The microphone 115 is a circuit that converts sound into electrical signals. The speaker 116 is a circuit that converts electrical signals into physical vibration to produce sound. The audio input/output I/F 117 is a circuit that processes the input and output of audio signals between the microphone 115 and the speaker 116 under the control of the CPU 101.

The display 118 is a display that displays screen information as an image, and may be implemented by, for example, a liquid crystal display or an organic electro-luminescence (EL) display. The screen information includes, for example, a setting screen, notification information, a text file, an image file, a file list, or a file editing screen.

The touch panel 121 is an input device for the user to operate input to, for example, a setting screen, notification information, a text file, an image file, a file list, a download file, and a file editing screen displayed on the display 118. For example, when the user touches a file displayed on the display 118 to perform an operation on the file, the touch panel 121 detects the touched position and the operation is performed on the file.

The external device connection I/F 119, which may be implemented by an interface circuit, is an interface for connection with peripheral devices. The short-range communication circuit 120 is a short-range or contactless communication circuit in compliance with a communication protocol such as the near field communication (NFC) or Bluetooth^{®}.

The terminal apparatus 1 further includes a bus line 110. The bus line 110 is, for example, an address bus or a data bus, which electrically connects the components or elements.

### Time-Limit Management Apparatus

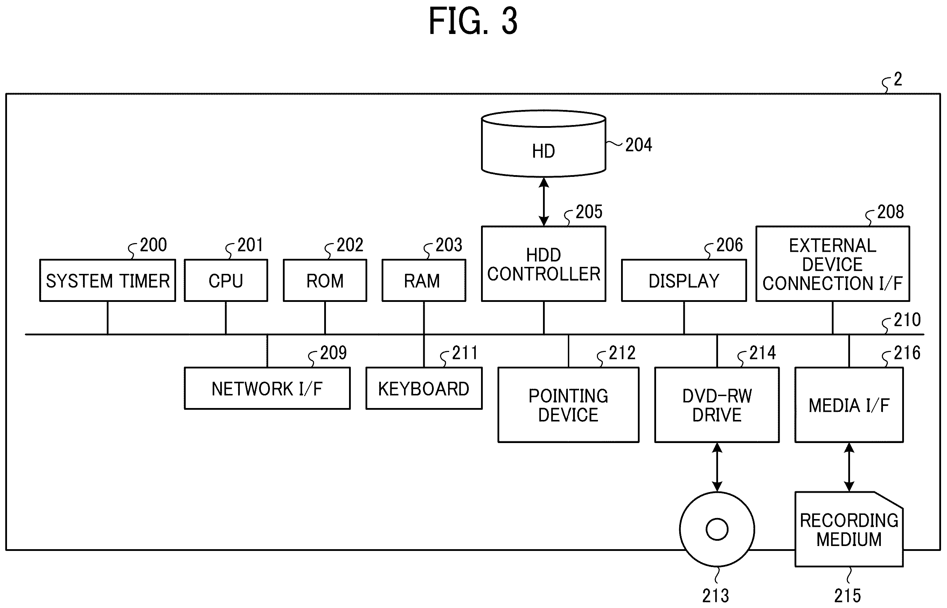

FIG. 3 is a block diagram illustrating a hardware configuration of an information processing apparatus. The hardware configuration of the information processing apparatus illustrated in FIG. 3 is given by way of example as a hardware configuration of the time-limit management apparatus 2. The terminal apparatus 1 may also have this hardware configuration. As illustrated in FIG. 3, the time-limit management apparatus 2, which is implemented by the information processing apparatus, includes a system timer 200, a CPU 201, a ROM 202, a RAM 203, a hard disk (HD) 204, a hard disk drive (HDD) controller 205, a display 206, an external device connection I/F 208, a network I/F 209, a keyboard 211, a pointing device 212, a digital versatile disk-rewritable (DVD-RW) 213, a DVD-RW drive 214, a recording medium 215, and a media I/F 216.

The system timer 200 generates a system time of the apparatus to which the system timer 200 belongs.

The CPU 201 controls the overall operation of the time-limit management apparatus 2. The ROM 202 stores a program such as an IPL used for booting the CPU 201. The RAM 203 is used as a work area for the CPU 201.

The HD 204 stores programs and data. The HDD controller 205 controls the reading of programs and data from, or the writing of programs and data to, the HD 204 under the control of the CPU 201.

The DVD-RW drive 214 controls the reading of data from, or the writing of data to, a DVD-RW 213, which is an example of a removable recording medium. The removable recording medium is not limited to a DVD-RW and may be, for example, a digital versatile disc recordable (DVD-R). The media I/F 216 controls the reading of data from, or the writing of data to, the recording medium 215, which is an example of a removable recording medium such as a flash memory.

The external device connection I/F 208, which may be implemented by an interface circuit, is an interface for connection with external devices such as an external storage device.

The display 206 is a display, and may be implemented by, for example, a liquid crystal display or an organic EL display. The keyboard 211 is an example of an input device provided with multiple keys used for inputting characters, numerical values, and various instructions. The pointing device 212 is an example of an input device that allows selection or execution of various instructions, selection of a processing target, and movement of a cursor.

The network I/F 209, which may be implemented by an interface circuit, is an interface for data communication through the communication network 3.

The time-limit management apparatus 2 further includes a bus line 210. The bus line 210 is, for example, an address bus or a data bus, which electrically connects the components or elements.

### Functional Configuration

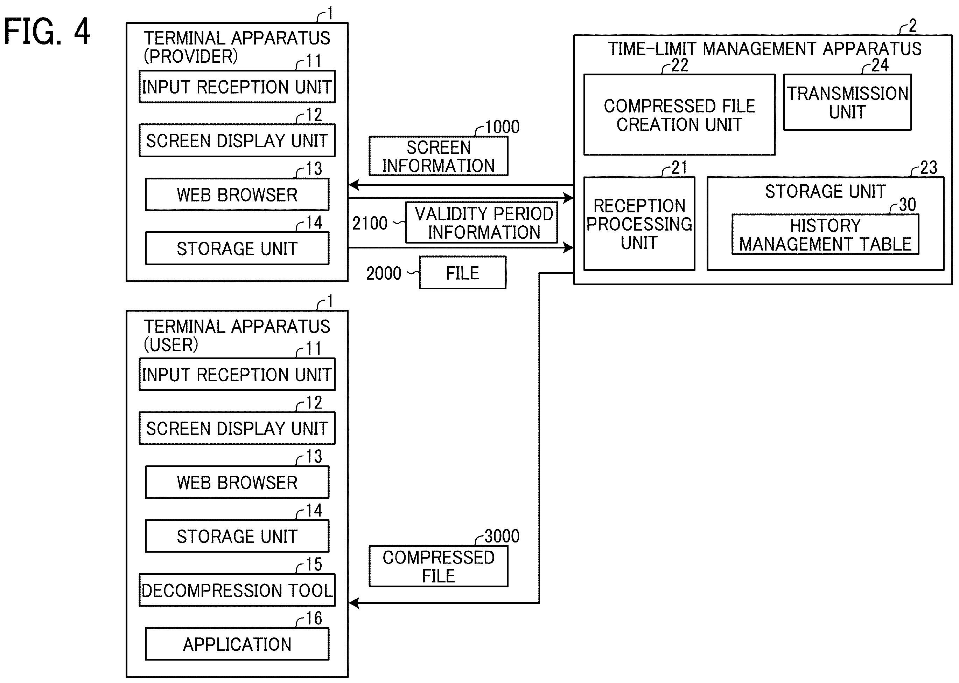

FIG. 4 is a block diagram illustrating functional configurations of the terminal apparatuses 1 and the time-limit management apparatus 2. The terminal apparatuses 1 and the time-limit management apparatus 2 each include, for example, an operating system (OS), middleware, and various applications. The functions of the terminal apparatus 1 of the provider, which is implemented by a computer, are implemented by the CPU 101 (see FIG. 2) of the terminal apparatus 1 (see FIG. 2) executing instructions included in one or more programs stored in the EEPROM 104 (see FIG. 2). The functions of the time-limit management apparatus 2, which is implemented by one or more computers, are implemented by the CPU 201 of the time-limit management apparatus 2 (see FIG. 3) executing instructions included in one or more programs loaded from, for example, the HD 204 to RAM 203.

Among the functional configurations illustrated in FIG. 4, one is a functional configuration for locally disabling the use of a file whose validity period has expired and another is a functional configuration for explanation in association with the aforementioned functional configuration.

The functional configurations illustrated in FIG. 4 are given by way of example. The functional configurations of the terminal apparatuses 1 and the time-limit management apparatus 2 are not limited thereto.

In FIG. 4, the functional configurations are illustrated separately for the terminal apparatus 1 of the provider and the terminal apparatus 1 of the user. However, the terminal apparatus 1 of the provider may also serve as the terminal apparatus 1 of the user.

As illustrated in FIG. 4, the terminal apparatus 1 of the provider includes an input reception unit 11, a screen display unit 12, a web browser 13, and a storage unit 14.

Also, in FIG. 4, the terminal apparatus 1 of the user includes, in addition to the input reception unit 11, the screen display unit 12, the web browser 13, and the storage unit 14 illustrated as the functional units of the terminal apparatus 1 of the provider, a decompression tool 15 and an application 16.

The input reception unit 11 receives, via the touch panel 121 (see FIG. 2), the operation performed by the user to, for example, a setting screen, a character file, an image file, a file list, a download file, or a file editing screen displayed on the display 118 (see FIG. 2).

For example, when the user touches the display of the display 118 (see FIG. 2), the touch panel 121 (see FIG. 2) detects the touched position and receives the operation. The operation is not limited to the touch operation to the display of the display 118. In the case where the terminal apparatus 1 has a hardware configuration including a pointing device or a keyboard, that is, in the case where the terminal apparatus 1 has a hardware configuration that a personal computer typically has, the aforementioned operation performed with the touch operation may be performed with a cursor operation and a click operation using the pointing device, or with a hardware key operation.

The aforementioned operation includes inputting a number, a character, or a value selected from options. The input on the setting screen includes, for example, input of validity period information and input for designating a file to be uploaded.

The aforementioned operation also includes an operation on a file. In the present embodiment, the operation on a file refers to an operation on a file performed by activating and using a program (such as the decompression tool 15 or the application 16) corresponding to a file having been processed in the time-limit management apparatus 2. For example, the operation performed by the decompression tool 15 corresponds to a decompression operation for decompressing a file, and the operation performed by the application 16 corresponds to an opening operation for opening a file. In addition, the operation on a file includes, for example, an operation for copying a file.

The screen display unit 12 displays display information generated by the CPU 101 (see FIG. 2) on the display 118 (see FIG. 2) as an image. The display information includes, for example, a text file, an image file, a video file, a file editing screen corresponding to the type of the file to be opened, notification information, a setting screen, and a file list. Among these, the setting screen used by the provider and the file list used by the user are generated based on screen information 1000 transmitted from the time-limit management apparatus 20.

The web browser 13 accesses the time-limit management apparatus 2 using a HyperText Transfer Protocol (HTTP) communication. A file 2000 (a file to be uploaded) illustrated in FIG. 4 is uploaded to the time-limit management apparatus 2 using an extended function of the HTTP or a file transfer service of a file transfer protocol (FTP). The file 2000 (the file to be uploaded) is transferred to a predetermined location where the time-limit management apparatus 2 acquires the file.

The storage unit 14 of the terminal apparatus 1 of the provider temporarily stores a file (a file to be shared) before being uploaded.

The storage unit 14 of the terminal apparatus 1 of the user stores the file having been processed in the time-limit management apparatus 2, which is acquired via the time-limit management apparatus 2.

In the present embodiment, the file having been processed in the time-limit management apparatus 2 is a compressed file 3000 illustrated in FIG. 4, or a file with validity period after a decompression process, which has been generated by decompressing the compressed file 3000, and a dynamic link library (DLL) for performing time-limit management for the file with validity period, as will be described in detail later.

The decompression tool 15 performs the decompression process on the file having been processed in the time-limit management apparatus 2.

The application 16 is an application corresponding to the file with validity period having been processed in the time-limit management apparatus 2. The application 16 is an application that provides the functions of the file editing screen. The application 16 performs an operation on the file with validity period under the time-limit management performed by the DLL. Although the opening operation is described as an example of the operation on a file, other operations such as the operation for copying a file also correspond to the operation on a file.

In the present embodiment, the file with validity period is the file 2000 (the file to be shared) to or in which validity period information 2100 is added or embedded.

As illustrated in FIG. 4, the time-limit management apparatus 2 includes a reception processing unit 21, a compressed file creation unit 22, a storage unit 23, and a transmission unit 24.

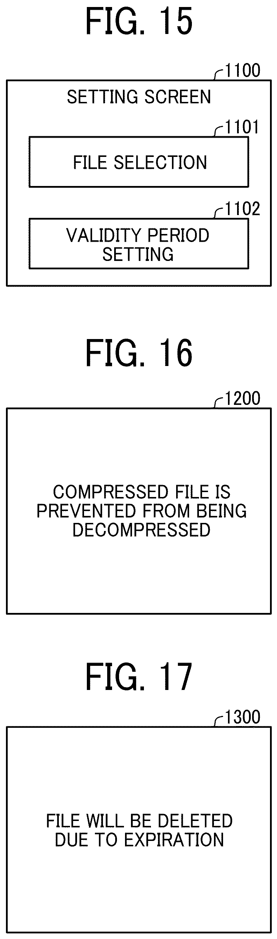

The reception processing unit 21 is, for example, a web server. The reception processing unit 21 receives a request, performs a process, and transmits, to the request source, a response to the request. For example, the reception processing unit 21 transmits the screen information 1000 requested by the web browser 13 of the terminal apparatus 1 to the terminal apparatus 1 that is the request source. Subsequently, when the time-limit management apparatus 2 receives the validity period information 2100 and information on the file 2000 (the file to be shared) from the terminal apparatus 1 of the provider via the setting screen (see FIG. 15) displayed based on the screen information 1000, the storage unit 23 stores the validity period information 2100 and the information on the file 2000 (the file to be shared) in association with each other.

In the present embodiment, for example, the storage unit 23 stores management information of the file 2000 (the file to be shared) and the validity period information 2100 in a history management table 30 in association with each other. The body of the file 2000 (the file to be shared) is stored in the storage destination set in the history management table 30 by the terminal apparatus 1 using the FTP transfer. The storage location may be an internal storage area in the time-limit management apparatus 2 or an external storage area.

In the present embodiment, as an example, the reception processing unit 21, the compressed file creation unit 22, the storage unit 23, and the transmission unit 24 are included in a single apparatus. In another embodiment, the reception processing unit 21, the compressed file creation unit 22, the storage area serving as the storage location where the file is stored, and the transmission unit 24 may be included in different apparatuses.

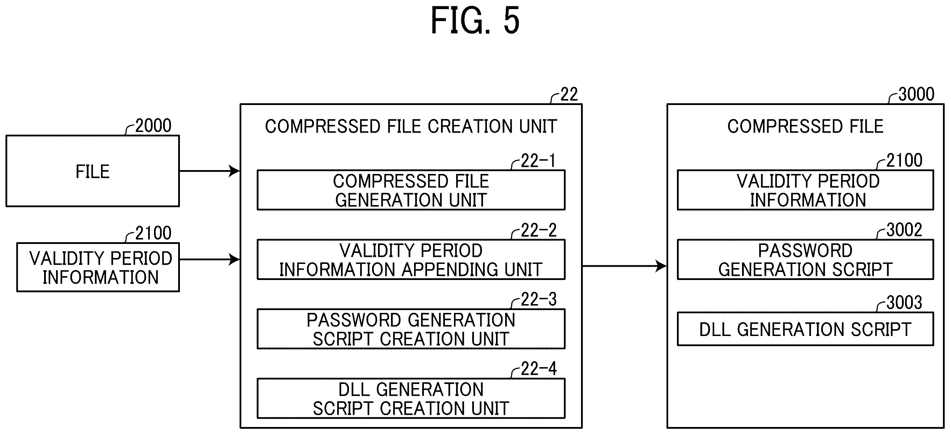

The compressed file creation unit 22 compresses the file 2000 (the file to be shared) to create the compressed file 3000. The compressed file creation unit 22 not only compresses the file 2000 (the file to be shared) to create the compressed file 3000, but also performs the special process to disable the use of the file to be shared whose validity period has expired, in the terminal apparatus 1. This special process will be described in detail in FIG. 5 and subsequent drawings.

The compressed file creation unit 22 may create the compressed file 3000 sequentially when the information on the file 2000 (the file to be shared) is received or collectively at a predetermined time. Further, when a request for downloading a file is received from the terminal apparatus 1 of the user, the compressed file creation unit 22 may perform the special process on the file serving as the file 2000.

The time-limit management apparatus 2 includes the transmission unit 24 for providing the compressed file 3000 corresponding to the file 2000 (the file to be shared) to the terminal apparatus 1 of the user. For example, the compressed file 3000 is transmitted to the terminal apparatus 1 of the user by the transmission unit 24 from the storage location set as the storage destination in the history management table 30.

Specifically, the transmission unit 24 stores, in a predetermined storage area, the compressed file 3000 having been created and generates screen information to be displayed as a list of files that can be used on the terminal apparatus 1 of the user. The list of files includes information on each file to be shared and a link of a storage location where the compressed file of each file is stored. In response to receiving a request for the screen information 1000 from the terminal apparatus 1 of the user, the transmission unit 24 transmits the screen information to be displayed as the list of files to the terminal apparatus 1 of the user. The terminal apparatus 1 of the user downloads the compressed file 3000 from the storage location linked to the file selected in the list of files displayed based on the screen information. In the case where the storage location linked to the file selected in the list of files displayed based on the screen information is located in an external storage server apparatus, the connection destination is automatically switched and the compressed file 3000 is downloaded from the storage location linked to the file.

Alternatively, the transmission unit 24 may transmit the compressed file 3000 to the terminal apparatus 1 of the user. For example, the provider designates the e-mail address of the terminal apparatus 1 of the user in the terminal apparatus 1 of the provider and the terminal apparatus 1 of the provider transmits the validity period information 2100 and the information on the file 2000 (the file to be uploaded) to the time-limit management apparatus 2. Then, the transmission unit 24 designates the e-mail address of the terminal apparatus 1 of the user and transmits, using the e-mail service corresponding to the e-mail address, the compressed file 3000 having been created.

### Process Performed by Compressed File Creation Unit

FIG. 5 is a diagram illustrating the special process performed by the compressed file creation unit 22. As illustrated in FIG. 5, the compressed file creation unit 22 compresses the file 2000 (the file to be shared) to create the compressed file 3000. Also, as illustrated in FIG. 5, in the created compressed file 3000, a password generation script 3002 and a DLL generation script 3003 are embedded and the validity period information 2100 is included.

The process performed by the compressed file creation unit 22 is described in more detail with reference to the configuration of the compressed file creation unit 22 illustrated in FIG. 5.

In FIG. 5, for ease of understanding, the process performed by the compressed file creation unit 22 is divided into processes performed by a compressed file generation unit 22-1, a validity period information appending unit 22-2, a password generation script creation unit 22-3, and a DLL generation script creation unit 22-4.

The compressed file generation unit 22-1 compresses the file 2000 (the file to be shared) in a predetermined format.

The validity period information appending unit 22-2 appends the validity period information 2100.

The password generation script creation unit 22-3 and the DLL generation script creation unit 22-4 create respective scripts. In the present embodiment, the scripts are each a program described in an interpreted language.

In FIG. 5, the password generation script creation unit 22-3 and the DLL generation script creation unit 22-4 are illustrated as a configuration in the present embodiment, but the types of scripts are not limited to a password generation script and a DLL generation script. For example, the configuration may be modified as appropriate by omitting one of the scripts, dividing each script into multiple scripts, or including other scripts.

The compressed file 3000 to be created is, for example, an archive in a self-extracting format, in which the validity period information 2100, the password generation script 3002, and the DLL generation script 3003 are embedded.

In the present embodiment, the scripts are embedded in the archive of the compressed file 3000 as an example. However, the scripts may be arranged in any manner as long as the decompression tool 15 can analyze the compressed file 3000, identify the respective scripts, and execute the respective scripts. The same applies to the validity period information 2100.

### Structure of History Management Table

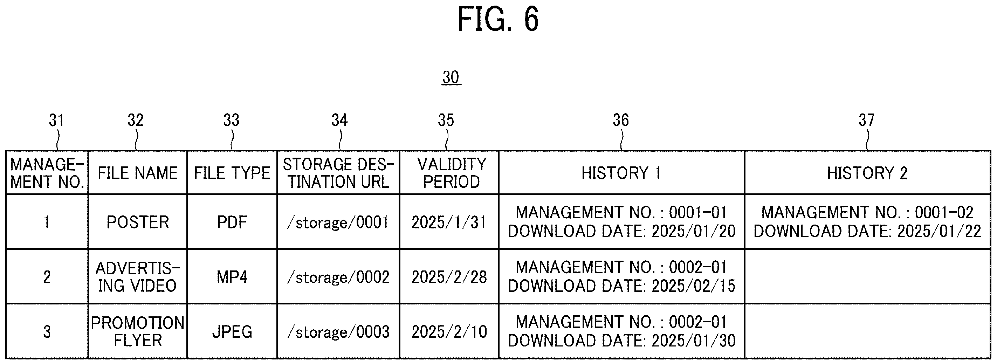

FIG. 6 is a diagram illustrating the structure of the history management table 30. The history management table 30 illustrated in FIG. 6 has fields of a "management No." item 31, a "file name" item 32, a "file type" item 33, a "storage destination Uniform Resource Locator (URL)" item 34, a "validity period" item 35, a "history 1" item 36, and a "history 2" item 37. In the history management table 30, information corresponding to each field is associated with one another for each file.

The "management No." item 31 indicates a file management number of a file. The "file name" item 32 indicates the file name of the file. The "file type" item 33 indicates the type of file format of the file. The "storage destination URL" item 34 indicates information indicating a storage destination of the file. The URL of the storage area that is the storage destination is given by way of example. The "validity period" item 35 indicates validity period information of the file. The "history 1" item 36 indicates a usage history of the file. For example, when a file is downloaded, the download history of the file is first set in the "history 1" item 36. Then, each time the same file is downloaded, the download history of the file is set in a "history" item to be subsequently generated, such as the "history 2" item 37.

### Process to Upload File

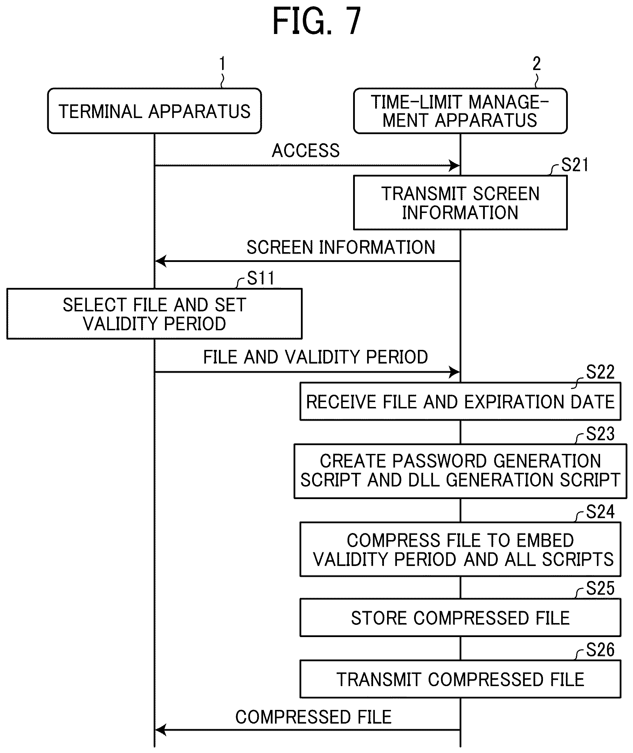

With reference to FIG. 7, the process performed in the terminal apparatus 1 and the time-limit management apparatus 2 when the file 2000 (the file to be uploaded) is uploaded from the terminal apparatus 1 to the time-limit management apparatus 2 is described below.

FIG. 7 is a sequence diagram illustrating the process performed in the terminal apparatus 1 and the time-limit management apparatus 2 when the file 2000 (the file to be uploaded) is uploaded from the terminal apparatus 1 to the time-limit management apparatus 2.

The terminal apparatus 1 accesses the time-limit management apparatus 2 to start the process.

In step S21, the time-limit management apparatus 2 transmits the screen information 1000 (see FIG. 4) to be displayed as the URL designated by the terminal apparatus 1 to the terminal apparatus 1. Through such a communication with the terminal apparatus 1, the time-limit management apparatus 2 transmits, to the terminal apparatus 1, the screen information to be displayed as the setting screen (see FIG. 15) for sharing a file.

In step S11, the terminal apparatus 1 selects and sets a file (a file to be shared) and sets a validity period on the setting screen displayed based on the screen information transmitted from the time-limit management apparatus 2, and transmits the set information to the time-limit management apparatus 2. The file (the file to be shared) is transmitted to a designated location using, for example, the FTP transfer.

When the time-limit management apparatus 2 receives the information on the file (the file to be shared) and the validity period set by the terminal apparatus 1 in step S22, the time-limit management apparatus 2 sets management information for managing the file that is the file 2000 (the file to be shared) and the validity period information 2100 in the history management table 30.

The management information includes, for example, information corresponding to each of the "management No." item 31, the "file name" item 32, the "file type" item 33, and the "storage destination URL" item 34 of the history management table 30 illustrated in FIG. 6. The validity period information 2100 is information corresponding to the "validity period" item 35 of the history management table 30 illustrated in FIG. 6. The validity period information 2100 is set for the "validity period" item 35.

In step S23, the time-limit management apparatus 2 creates scripts corresponding to the file 2000 (the file to be shared) received from the terminal apparatus 1 at a predetermined timing. In step S24, the time-limit management apparatus 2 compresses the file 2000 (the file to be shared) and embeds the validity period and the scripts in the file. In step S26, the time-limit management apparatus 2 transmits the compressed file 3000 in which the validity period and the scripts are embedded to the terminal apparatus 1.

At this point, the embedding of the validity period is embedding the validity period information 2100 illustrated in FIG. 5. The embedding of the scripts are embedding the password generation script 3002 created by the password generation script creation unit 22-3 and the DLL generation script 3003 created by the DLL generation script creation unit 22-4 illustrated in FIG. 5.

In step S25, the time-limit management apparatus 2 stores the compressed file 3000 in which the validity period and the scripts are embedded in a predetermined storage area. In the case where the storage location is different from the information in the "storage destination URL" item 34 of the history management table 30 illustrated in FIG. 6, the information in the "storage destination URL" item 34 is updated to the information on the storage location. In the case where the storage location is the same as the storage destination of the "storage destination URL" item 34, no update is required.

### Process Performed in Terminal Apparatus after File Is Downloaded to Terminal Apparatus

### Decompression Process of Compressed File

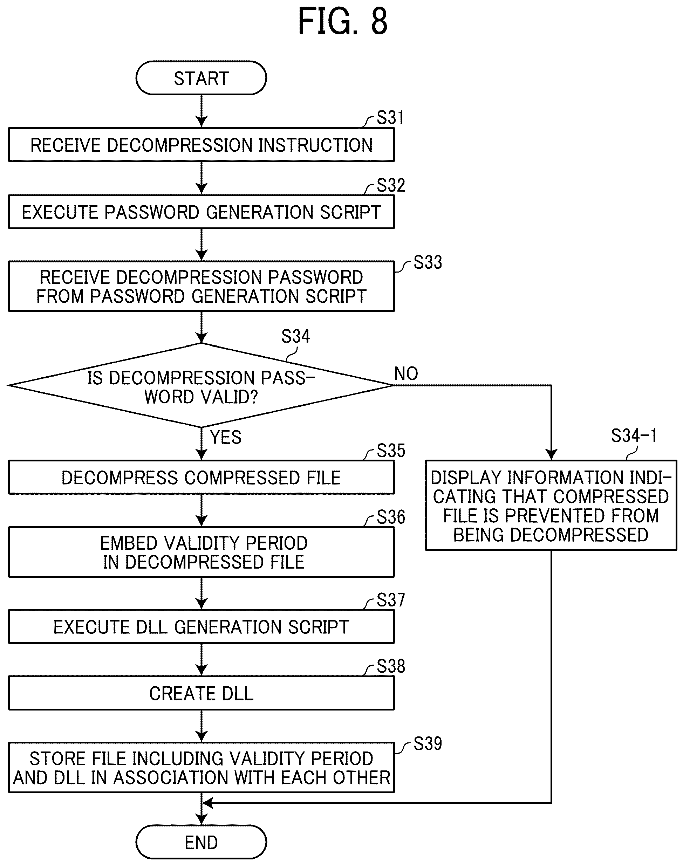

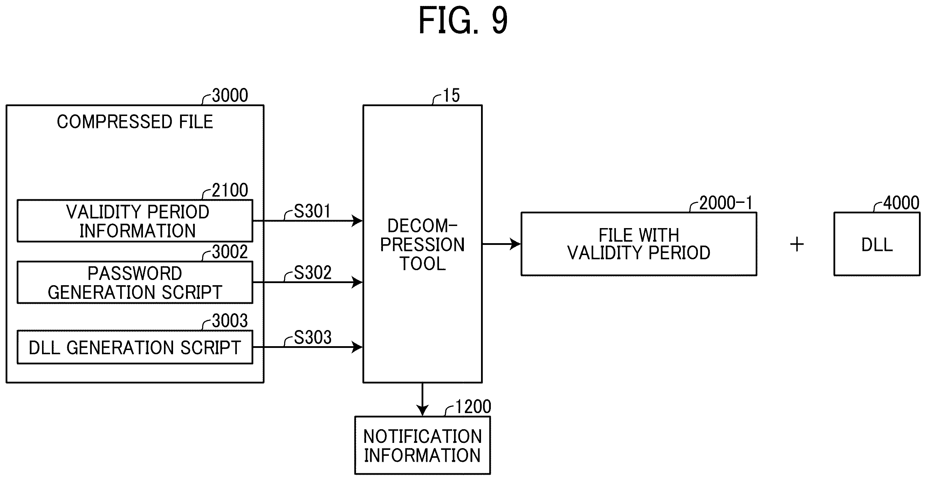

The process performed in the terminal apparatus 1 after the compressed file 3000 is downloaded to the terminal apparatus 1 is described below. Frist, the process at the time of decompression illustrated in FIG. 8 is described with reference to FIG. 9. In the following description of FIG. 8, FIGs. 10 and 11 are referred to as appropriate.

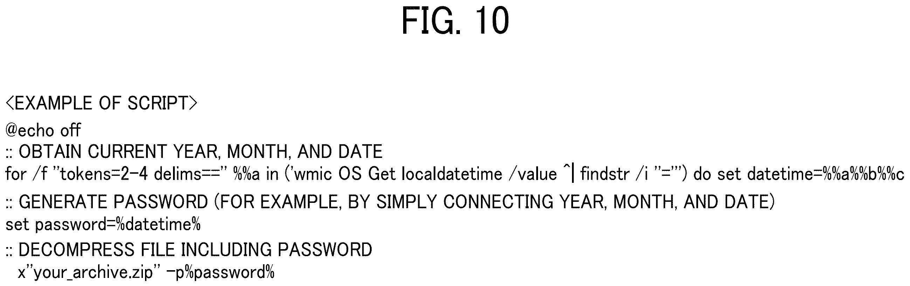

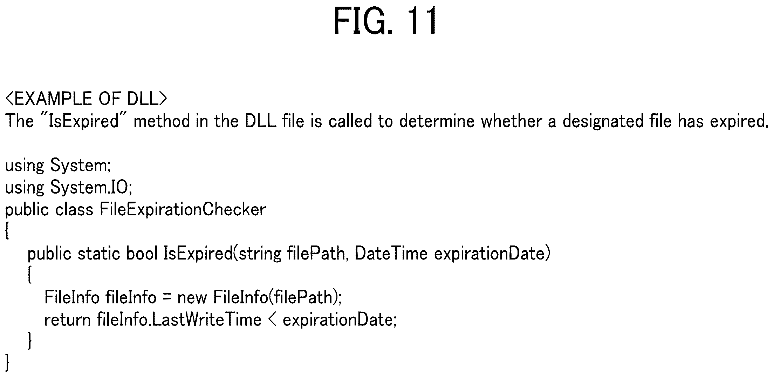

FIG. 9 is a block diagram illustrating the process at the time of the decompression illustrated in FIG. 8. FIG. 10 is a diagram illustrating an example of the password generation script 3002. FIG. 11 is a diagram illustrating an example of the DLL generated by the DLL generation script 3003.

FIG. 8 is a flowchart of the process to decompress, in the terminal apparatus 1, the compressed file 3000 that has been downloaded. As an example, the process using the decompression tool 15 is described below.

In step S31, the decompression tool 15 receives a decompression instruction.

The process in step S31 is described below as an example. For example, it is assumed that the compressed file 3000 illustrated in FIG. 9 is clicked (single-clicked or double-clicked) on the display of the terminal apparatus 1. Then, the decompression tool 15 is activated as illustrated in FIG. 9. The decompression tool 15 reads the information on the compressed file 3000 (the process in step S301 of FIG. 9), and starts the decompression process.

In step S32, after the start of the decompression process, the decompression tool 15 executes the password generation script 3002 embedded in the compressed file 3000.

The password generation script 3002 is formed of commands for acquiring the system time of the terminal apparatus 1, generating a decompression password using the system time, and transferring the generated decompression password to the decompression tool 15. In FIG. 10, an example of the password generation script 3002 is illustrated.

In step S33, the decompression tool 15 receives the decompression password (the process in step S302 of FIG. 9) generated by the password generation script 3002. The decompression password is date and time information created based on the system time of the terminal apparatus 1.

In step S34, the decompression tool 15 determines whether the decompression password is valid based on the decompression password and the validity period information 2100 embedded in the compressed file 3000. At this point, the validity period information 2100 corresponding to the password is compared with the generated decompression password. In the case where the system time satisfies the validity period, the decompression password is determined to be valid. It is determined that the system time satisfies the validity period when the current system time is within the validity period. In the case where the system time does not satisfy the validity period, that is, in the case where the current system time is not within the validity period, the decompression password is determined not to be valid either. In the following description, the determination of whether the system time satisfies the validity period is described by taking as an example the determination of whether the current system time is within the validity period.

In the case where the decompression tool 15 determines that the decompression password is not valid (NO in step S34), a notification (see FIG. 16) indicating that the compressed file is prevented from being decompressed is displayed in step S34-1, and the decompression process by the decompression tool 15 is terminated. In this way, the permission of use is controlled with the decompression password generated at the time of decompression. When the decompression password is determined not to be valid, the compressed file is prevented from being decompressed.

In the case where the decompression tool 15 determines that the decompression password is valid (YES in step S34), the decompression tool 15 decompresses the compressed file 3000 to create a decompressed file in step S35, and embeds the validity period information 2100 appended to the compressed file 3000 in the decompressed file in step S36. In the process of step S35, the file 2000 to be shared, which is the original file of the compressed file 3000, is extracted from the compressed file 3000. In the process of step S36, the validity period information is embedded in the file 2000 to be shared, which is the original file of the compressed file 3000. For example, the validity period information is embedded as information in an exchangeable image file format (Exif) or metadata.

The decompression tool 15 executes the DLL generation script 3003 in step S37 to create a DLL 4000 in step S38.

In step S39, the decompression tool 15 stores a file with validity period 2000-1, in which the validity period information 2100 is embedded, and the DLL 4000 in the storage unit 14 of the terminal apparatus 1 in association with each other.

In FIG. 9, the execution of the DLL generation script 3003 is described as the process in step S303. The DLL 4000 is generated by executing the DLL generation script 3003. In the storage unit 14 of the terminal apparatus 1, the file with validity period 2000-1 and the DLL 4000 are stored in association with each other.

### Processes of Application and Dynamic Link Library (DLL)

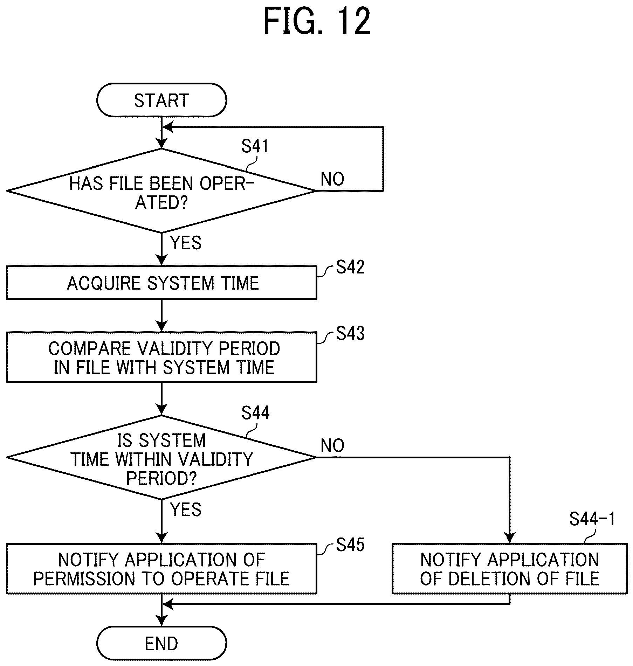

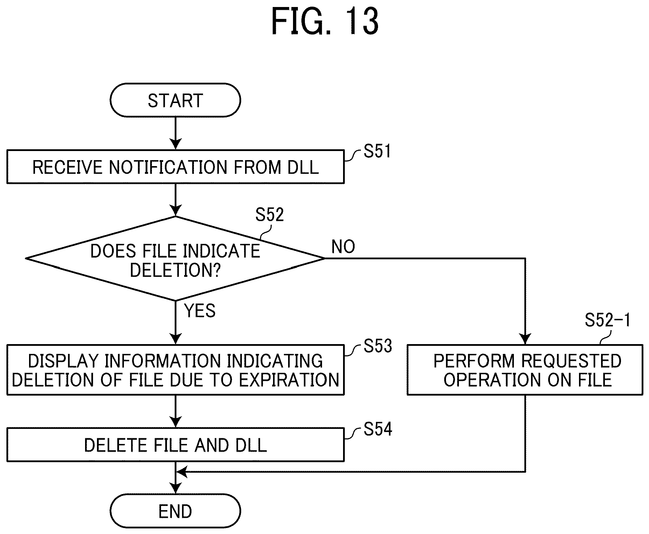

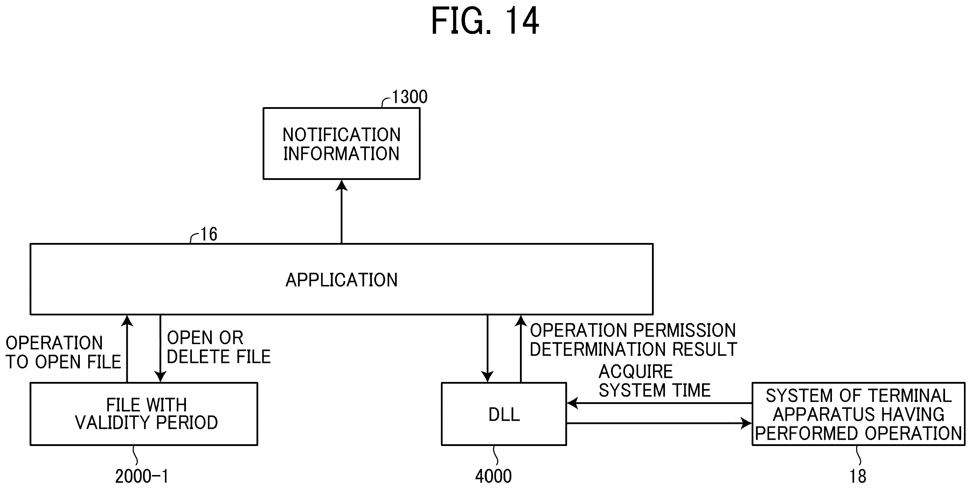

With reference to FIGs. 12 to 14, the processes performed by the application 16 on the file with validity period 2000-1 after the decompression process and the DLL 4000 are described below. FIG. 12 is a flowchart of the process performed by the DLL 4000 stored in the terminal apparatus 1. FIG. 13 is a flowchart of the process performed by the application 16 after the process performed by the DLL 4000. FIG. 14 is a block diagram for explaining the processes illustrated in FIGs. 12 and 13. The process in FIG. 12 and the process in FIG. 13 are described in this order with reference to the block diagram of FIG. 14. The DLL 4000 is specifically an example of the DLL illustrated in FIG. 11.

In step S41, the DLL 4000 determines whether an operation has been performed on the file with validity period 2000-1.

An example of the process in step S41 is described below. For example, it is assumed that an opening operation of clicking (single-clicking or double-clicking) is performed on the file with validity period 2000-1 illustrated in FIG. 14 on the terminal apparatus 1. Since the application 16 illustrated in FIG. 14 is associated with the file with validity period 2000-1, the application 16 is activated and receives an operation command of the opening operation. The application 16 executes the DLL 4000 associated with the file with validity period 2000-1 on which the opening operation has been performed. In this way, when the opening operation is performed on the file with validity period 2000-1 on the terminal apparatus 1, the DLL 4000 performs the following process.

In step S42, the DLL 4000 acquires the system time of a system 18 (a basic system of the terminal apparatus 1 in which the opening operation is performed) of the terminal apparatus to which the system 18 belongs.

In step S43, the DLL 4000 acquires the validity period information 2100 included in the file with validity period 2000-1 and compares the validity period information 2100 with the system time acquired in step S42.

In step S44, the DLL 4000 determines whether the system time is within the validity period. In the case where the system time is determined not to be within the validity period (NO in step S44), the DLL 4000 notifies the application 16 of the deletion of the file in step S44-1.

In the case where the system time is determined to be within the validity period (YES in step S44), the DLL 4000 notifies the application 16 of the permission to operate the file in step S45.

An operation permission determination result illustrated in FIG. 14 corresponds to permission for controlling permission of use or the deletion of the file.

In the case where the operation permission determination result from the DLL 4000 indicates the permission, the application 16 opens the file with validity period 2000-1. In the case where the operation permission determination result from the DLL 4000 indicates the deletion of the file, the application 16 deletes the file with validity period 2000-1 and the DLL 4000 from the terminal apparatus 1.

The processes performed by the application 16 after the process in step S45 where the DLL 4000 notifies the application 16 of the permission to operate the file and after the process in step S44-1 where the DLL 4000 notifies the application 16 of the deletion of the file are described below. In step S51, the application 16 receives the notification from the DLL 4000. In the case where the received notification indicates the permission (NO in step S52), the application 16 executes the requested operation on the file, such as an opening operation, in step S52-1.

In the case where the received notification indicates the deletion of the file (YES in step S52), the application 16 displays a notification, such as notification information 1300 illustrated in FIG. 14, indicating that the file is to be deleted due to the expiration of the validity period in step S53.

In step S54, the application 16 deletes the file with validity period 2000-1 and the DLL 4000 from the terminal apparatus 1.

### Information to be Displayed

FIG. 15 is a diagram illustrating an example of a setting screen 1100. As illustrated in FIG. 15, the setting screen 1100 includes a file designation box 1101 and a validity period setting box 1102.

The file designation box 1101 is a box used for designating a file to be shared. As an example, the file designation box 1101 is a file selection box used for selecting a file to be shared from a directory list.

The validity period setting box 1102 is a box used for setting a validity period. The validity period may be set by directly inputting numbers or by using a list box indicating a date and time.

FIG. 16 is a diagram illustrating an example of notification information to be displayed when the compressed file is prevented from being decompressed on the terminal apparatus 1. When the compressed file is prevented from being decompressed on the terminal apparatus 1, for example, notification information 1200 is displayed in a pop-up manner.

FIG. 17 is a diagram illustrating an example of notification information to be displayed when the file is to be deleted on the terminal apparatus 1. When the file is to be deleted on the terminal apparatus 1, for example, notification information 1300 is displayed in a pop-up manner.

The decompression tool 15 and the application 16 may be included in the compressed file 3000 in a self-extracting format to be used by the terminal apparatus 1, or may be acquired in advance by the terminal apparatus 1.

For example, the file with validity period 2000-1 after the decompression process, which has been generated by decompressing the compressed file 3000 on the time-limit management apparatus 2, and the DLL 4000 may be transmitted to the terminal apparatus 1, and the application 16 of the terminal apparatus 1 may perform the operation on the file with validity period 2000-1.

When the decompression is performed by the decompression tool 15 of the terminal apparatus 1, the decompression process is performed on the file that is associated with the file extension of the file having been processed in the time-limit management apparatus 2.

The application 16 is an application corresponding to the file extension of the file with validity period having been processed in the time-limit management apparatus 2, and performs an opening operation for opening the file with validity period under the time-limit management performed by the DLL.

The file extension of the file with validity period is a file extension indicating that the file corresponds to the application 16, and is a special file extension that allows the application 16 to be distinguished from general-purpose applications.

As the file extension of the file with validity period, a general-purpose file extension used for the file 2000 (the file to be shared) may be used as it is. In such a case, when the general-purpose file extension is used as it is, there is a possibility that the file with the validity period is opened by the general-purpose application and can be used. For this reason, the contents of the file to be shared are changed, in the time-limit management apparatus 2, to the contents in a format that the application 16 can recognize, and the file to be shared can be used only when the application 16 has opened the file.

As a modified example in this case, a modification is considered in which the structure of the header or data of the file to be shared is changed to a special structure, and the application 16 identifies the contents corresponding to the change and restores the original data.

In addition, for the purpose of preventing an unauthorized operation by a third party, the password or the validity period information may be encrypted. Alternatively, the data string of the validity period may be rearranged into another data string that prevents a third party from understanding that the data string indicates the validity period.

Further, by implementing a function to monitor a change of the file system in the DLL and specifying the type of the file to be monitored, the DLL transmits a notification of an event to delete the file whose validity period has expired to the application and the application executes the deletion of the file in response to receiving the notification from the DLL. In this way, no operation can be performed on the file whose validity period has expired, and when an operation is performed on the file, the file is deleted. Thus, complicated file management does not need to be performed by the user.

As described above, the time-limit management apparatus 2 according to the present embodiment prevents a file whose validity period has expired from being used on the terminal apparatus 1. In addition, when the compressed file 3000 is decompressed by the terminal apparatus 1 according to the present embodiment, the password generation script 3002 is executed to determine whether the validity period has expired. In the case where it is determined that the validity period has expired, the compressed file 3000 is prevented from being decompressed. Further, the DLL 4000 generated by the DLL generation script 3003 deletes the file (the file with validity period 2000-1) after the decompression process, of which validity period has expired, in the terminal apparatus 1. Accordingly, the time-limit management is performed for the file whose validity period has expired at two levels, namely, for the compressed file 3000 to be decompressed in the terminal apparatus 1 and the file (the file with validity period 2000-1 associated with the DLL 4000) after the decompression process. Thus, the file whose validity period has expired is prevented from being used on the terminal apparatus 1.

Furthermore, it is assumed that the file can only be recognized by a dedicated decompression tool or application. Then, even when the file is copied from the terminal apparatus 1 to another terminal apparatus, the file is prevented from being used on the other terminal apparatus to which the file has been copied. In other words, the use of the file locally can be disabled.

The programs executed by each of the terminal apparatuses and the time-limit management apparatus according to one aspect of the present disclosure may be incorporated in, for example, a ROM in advance and provided. Alternatively, the programs executed by each of the terminal apparatuses and the time-limit management apparatus according to one aspect of the present disclosure may be recorded in a computer-readable recording medium such as a compact disc read-only memory (CD-ROM), a flexible disk (FD), a compact disc-recordable (CD-R), or a digital versatile disc (DVD) in an installable format or an executable format, and provided. Still alternatively, the programs executed by each of the terminal apparatuses and the time-limit management apparatus according to one aspect of the present disclosure may be configured to be stored in a computer connected to a network such as the Internet and provided by being downloaded via the network.

Although the embodiment and modification of the present disclosure have been described above, the above-described embodiment and modification are presented as examples and are not intended to limit the scope of the present disclosure. Such novel embodiment and modification may be carried out in various other modified forms. Various omissions, substitutions, and changes may be made without departing from the gist of the present disclosure. Such novel embodiment and modification thereof are within the scope and gist of the present disclosure and are also within the scope of the claims and the equivalent thereof.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In another aspect, a terminal apparatus includes a decompression tool that executes a program, a storage unit that stores the program, and a display unit. The decompression tool executes the program, starts a decompression process on a compressed file obtained by compressing a file, executes a script during the decompression process to acquire a system time. Based on comparison between the system time and validity period information, in a case that the system time does not satisfy the validity period information, the decompression tool terminates the decompression process, and in a case that the system time satisfies the validity period information, the decompression tool decompresses the compressed file to obtain the file. The compressed file includes a password that is the validity period information indicating a validity period of the file. A decompression password is generated based on the system time acquired by executing the script. Based on comparison between the decompression password and the password, in the case that the system time does not satisfy the validity period information, the decompression process is terminated, and in the case that the system time satisfies the validity period information, the compressed file is decompressed to obtain the file. The compressed file is the compressed file in a self-extracting format. In a case that the decompression process is prevented from being performed based on comparison between the decompression password and the password, a notification indicating that the decompression process is prevented from being performed is displayed on the display unit. In the case that the system time satisfies the validity period information, the decompression tool appends the validity period information to the file after the decompression process, and executes the script included in the compressed file to generate a dynamic link library corresponding to the file decompressed through the decompression process. The dynamic link library acquires a system time generated after the compressed file is decompressed into the file, and the decompression tool controls to permit an application corresponding to the file after the decompression process to use the file after the decompression process based on comparison between the acquired system time generated after the compressed file is decompressed into the file and the validity period information appended to the file after the decompression process. The system time generated after the compressed file is decompressed into the file is the system time at a time an operation is performed on the file after the decompression process. The compressed file is the compressed file in the self-extracting format. The terminal apparatus further includes an application. In a case that the dynamic link library does not permit to use the file after the decompression process based on comparison between the validity period information appended to the file after the decompression process and the system time generated after the compressed file is decompressed into the file, the application deletes the file after the decompression process. In a case that the file after the decompression process is deleted from the terminal apparatus, a notification indicating that the file after the decompression process is to be deleted is displayed in the display unit.

In another aspect, a carrier medium carries computer-readable code for controlling a computer system of a system including an information processing apparatus and a terminal apparatus to carry out a method including compressing, with the information processing apparatus, a file to create a compressed file that includes validity period information and a script, transmitting, with the information processing apparatus, the created compressed file to the terminal apparatus connected to the information processing apparatus via a network, executing, with the terminal apparatus, the script on the terminal apparatus after a decompression process is started on the compressed file on the terminal apparatus, and controlling, with the script, permission to use the file on the terminal apparatus based on comparison between a system time of the terminal apparatus at a time the decompression process is performed and the validity period information. The method further includes appending, with the information processing apparatus, a password to the compressed file, appending, with the information processing apparatus, the password being the validity period information indicating a validity period of the file, and generating, with the script, another script that generates a decompression password to be compared with the password based on the system time of the terminal apparatus at a time the decompression process is performed. The method further includes creating, with the information processing apparatus, the compressed file being the compressed file in a self-extracting format, decompressing, with the information processing apparatus, the compressed file based on comparison between the decompression password and the validity period information that is the password appended to the compressed file, and appending, with the information processing apparatus, the validity period information to the file decompressed through the decompression process. The method further includes transmitting, with the information processing apparatus, in a case that the decompression process is prevented from being performed based on comparison between the decompression password and the password, a notification indicating that the decompression process is prevented from being performed to the terminal apparatus. The method further includes receiving, with the information processing apparatus, the file and the validity period information from another terminal apparatus that provides the file. The method includes creating, with the information processing apparatus, the compressed file that further includes still another script that generates a dynamic link library in the terminal apparatus and controlling, with the dynamic link library, permission to use, on the terminal apparatus, the file after the decompression process that is permitted to be used on the terminal apparatus, based on comparison between the system time acquired after the compressed file is decompressed into the file in the terminal apparatus and the validity period information. The method further includes generating, with the terminal apparatus, the system time after the compressed file is decompressed into the file being the system time of the terminal apparatus at a time an operation is performed on the file after the decompression process on the terminal apparatus. The method further includes creating, with the information processing apparatus, the compressed file being the compressed file in the self-extracting format and deleting, with an application included in the compressed file, in a case that the dynamic link library generated in the terminal apparatus does not permit to use the file after the decompression process on the terminal apparatus based on comparison between the validity period information appended to the file after the decompression process that is permitted to be used on the terminal apparatus and the system time acquired after the compressed file is decompressed into the file, the file after the decompression process from the terminal apparatus. The method includes transmitting, with the information processing apparatus, in a case that the application deletes the file after the decompression process from the terminal apparatus, a notification indicating that the file after the decompression process is to be deleted to the terminal apparatus.

In another aspect, a carrier medium carries computer-readable code for controlling a computer system of an information processing apparatus to carry out a method including starting a decompression process on a compressed file obtained by compressing a file, executing a script during the decompression process to acquire a system time at a time the decompression process is performed, based on comparison between the system time and the validity period information included in the compressed file, terminating, in a case that the system time does not satisfy the validity period information, the decompression process, and decompressing, in a case that the system time satisfies the validity period information, the compressed file to obtain the file. The method further includes creating the compressed file including a password that is the validity period information indicating a validity period of the file, generating a decompression password based on the system time acquired by executing the script, based on comparison between the decompression password and the password, terminating, in the case that the system time does not satisfy the validity period information, the decompression process, and decompressing, in the case that the system time satisfies the validity period information, the compressed file to obtain the file. The method includes creating the compressed file being the compressed file in a self-extracting format. The method further includes displaying, in a case that the decompression process is prevented from being performed based on comparison between the decompression password and the password, a notification indicating that the decompression process is prevented from being performed on a display of a terminal apparatus. The method further includes appending, in the case that the system time satisfies the validity period information, the validity period information to the file after the decompression process, executing the script included in the compressed file to generate a dynamic link library corresponding to the file decompressed through the decompression process, executing the script to generate the dynamic link library that acquires the system time of the terminal apparatus generated after the compressed file is decompressed into the file, and controlling to permit an application corresponding to the file after the decompression process to use the file after the decompression process based on comparison between the acquired system time generated after the compressed file is decompressed into the file and the validity period information appended to the file after the decompression process. The method includes generating the system time after the compressed file is decompressed into the file being the system time at a time an operation is performed on the file after the decompression process. The method includes creating the compressed file being the compressed file in the self-extracting format, and executing an application that deletes, in a case that the dynamic link library does not permit to use the file after the decompression process based on comparison between the validity period information appended to the file after the decompression process and the system time generated after the compressed file is decompressed into the file, the file after the decompression process. The method further includes displaying, in a case that the file after the decompression process is deleted from the terminal apparatus, a notification indicating that the file after the decompression process is to be deleted on the display of the terminal apparatus.

In another aspect, a method performed by a system including an information processing apparatus and a terminal apparatus includes, in a case that the system time satisfies the validity period information, appending, with the terminal apparatus, the validity period information to the file after the decompression process, executing, with the terminal apparatus, the script included in the compressed file to generate a dynamic link library corresponding to the file decompressed through the decompression process, acquiring, with the dynamic link library, the system time of the terminal apparatus generated after the compressed file is decompressed into the file, and controlling, with the terminal apparatus, to permit an application corresponding to the file after the decompression process to use the file after the decompression process based on comparison between the acquired system time generated after the compressed file is decompressed into the file and the validity period information appended to the file after the decompression process. The method further includes acquiring, with the terminal apparatus, the system time generated after the compressed file is decompressed into the file being the system time of the terminal apparatus at a time an operation is performed on the file after the decompression process on the terminal apparatus. The method further includes receiving, with the information processing apparatus, the file and the validity period information from another terminal apparatus that provides the file. The method includes compressing, with the information processing apparatus, the file to create the compressed file in a self-extracting format.

## Claims

1. A system (500) comprising:
an information processing apparatus (2); and
a terminal apparatus (1) connected to the information processing apparatus (2) via a network,
the information processing apparatus (2) including:
a compressed file creation unit (22) configured to compress a file to create a compressed file that includes validity period information and a script; and
a transmission unit configured to transmit the compressed file created by the compressed file creation unit (22) to the terminal apparatus (1),
the terminal apparatus (1) including:
a storage unit (14) configured to store a decompression tool (15);
a processing unit (101) configured to execute the decompression tool (15); and
a display unit (12),
wherein the decompression tool (15) is configured to:
start a decompression process on the compressed file received from the information processing apparatus (2);
execute the script during the decompression process to acquire a system time of the terminal apparatus (1); and
compare between the system time and the validity period information, wherein:
in a case that the system time does not satisfy the validity period information, the decompression tool terminates the decompression process; and
in a case that the system time satisfies the validity period information, the decompression tool decompresses the compressed file to obtain a decompressed file.

2. The system (500) according to claim 1, wherein
in the case the system time satisfies the validity period information, the decompression tool (15) is further configured to:
append the validity period information to the decompressed file;
execute the script to generate a dynamic link library corresponding to the decompressed file obtained through the decompression process;
acquire the system time of the terminal apparatus (1) after the decompression process using the dynamic link library; and
control to permit an application corresponding to the decompressed file to use the decompressed file based on a comparison between the system time acquired after the decompression process and the validity period information appended to the decompressed file.

3. The system (500) according to claim 2, wherein
the system time after the decompression process is the system time of the terminal apparatus (1) acquired at a time an operation is performed on the decompressed file at the terminal apparatus (1).

4. The system (500) according to claim 1, wherein
the information processing apparatus further includes a reception processing unit (21) configured to receive the file and the validity period information from another terminal apparatus (1) that provides the file.

5. The system (500) according to claim 1, wherein
the compressed file has a self-extracting format.

6. An information processing apparatus (2) comprising:
a compressed file creation unit (22) configured to compress a file to create a compressed file that includes validity period information and a script; and
a transmission unit (24) configured to transmit the compressed file created by the compressed file creation unit (22) to a terminal apparatus (1) connected to the information processing apparatus (2) via a network, wherein:
the script is executed on the terminal apparatus (1) after a decompression process is started on the compressed file at the terminal apparatus (1) to obtain a decompressed file; and
the script controls permission to use the decompressed file at the terminal apparatus (1) based on a comparison between a system time of the terminal apparatus (1) for the decompression process being performed and the validity period information.

7. The information processing apparatus (2) according to claim 6, wherein:
the compressed file creation unit (22) is configured to append a password to the compressed file, the password being the validity period information indicating a validity period of the file; and
the script includes another script that generates a decompression password to be compared with the password based on the system time of the terminal apparatus (1) acquired at a time the decompression process is performed.

8. The information processing apparatus (2) according to claim 7,
further comprising a processing unit (201) configured to execute a decompression tool (15) configured to:
decompress the compressed file based on the comparison between the decompression password and the validity period information, the compressed file having a self-extracting format; and
append the validity period information to the decompressed file.

9. The information processing apparatus (2) according to claim 8, wherein
in a case that the decompression process is prevented from being performed based on the comparison between the decompression password and the password, the decompression tool (15) transmits, to the terminal apparatus (1), a notification indicating that the decompression process is prevented from being performed.

10. The information processing apparatus (2) according to any one of claims 6 to 9,
further comprising a reception processing unit (21) configured to receive the file and the validity period information from another terminal apparatus (1) that provides the file.

11. The information processing apparatus (2) according to claim 6, wherein:
the compressed file creation unit (22) creates the compressed file that further includes still another script that generates a dynamic link library in the terminal apparatus (1); and
the dynamic link library controls permission to use, on the terminal apparatus (1), the decompressed file on the terminal apparatus (1), based on the comparison between the system time acquired after the decompression process is performed in the terminal apparatus (1) and the validity period information.

12. The information processing apparatus (2) according to claim 11, wherein
the system time after the decompression process is the system time of the terminal apparatus (1) acquired at a time an operation is performed on the decompressed file at the terminal apparatus (1).

13. The information processing apparatus (2) according to claim 11,
further comprising a processing unit configured to execute an application, the compressed file having a self-extracting format, wherein
in a case that the dynamic link library generated in the terminal apparatus (1) does not permit to use the decompressed file on the terminal apparatus (1) based on the comparison between the validity period information appended to the decompressed file and the system time acquired after the decompression process, the application deletes the decompressed file from the terminal apparatus (1).

14. The information processing apparatus (2) according to claim 13, wherein
in a case that the application deletes the decompressed file from the terminal apparatus (1), the application transmits, to the terminal apparatus (1), a notification indicating that the decompressed file is to be deleted.

15. A method performed by a system (500) including an information processing apparatus (2) and a terminal apparatus (1), the method comprising:
compressing (S24), with the information processing apparatus (2), a file to create a compressed file that includes validity period information and a script;
transmitting (S26), with the information processing apparatus (2), the compressed file to the terminal apparatus (1) via a network;
executing (S31), with the terminal apparatus (1), a decompression tool;
starting (S301), with the terminal apparatus (1), a decompression process on the compressed file received from the information processing apparatus (2);
executing (S32), with the terminal apparatus (1), the script during the decompression process to acquire a system time of the terminal apparatus (1); and
comparing, with the terminal apparatus (1), between the system time and the validity period information, wherein:
in a case that the system time does not satisfy the validity period information, the method further comprising terminating (S34-1), with the terminal apparatus (1), the decompression process; and
in a case that the system time satisfies the validity period information, the method further comprising decompressing (S35), with the terminal apparatus (1), the compressed file to obtain a decompressed file.
